Europäisches Patentamt

European Patent Office

Office européen des brevets

(19)

(11) Veröffentlichungsnummer: **0 151 268**
**A1**

(12) # EUROPÄISCHE PATENTANMELDUNG

(21) Anmeldenummer: **84115037.8**

(22) Anmeldetag: **10.12.84**

(51) Int. Cl.⁴: **C 08 L 25/00**

(30) Priorität: **15.12.83 DE 3345377**

(43) Veröffentlichungstag der Anmeldung:
**14.08.85 Patentblatt 85/33**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Echte, Adolf, Dr.**
**Leuschnerstrasse 42**
**D-6700 Ludwigshafen(DE)**

(72) Erfinder: **Hoenl, Hans, Dr.**
**Hauptstrasse 69 a**
**D-6719 Obersuelzen(DE)**

(72) Erfinder: **Groh, Wolfgang, Dr.**
**Mannheimer Strasse 94**
**D-6800 Mannheim 31(DE)**

(54) **Thermoplastische Formmasse.**

(57) Die Erfindung betrifft eine Formmasse aus einer Hartmatrix, A, aus Polystyrol in einem Anteil von 75 bis 95 Gew.-%, und eine darin verteilte Weichphase, B, in einem Anteil von 5 bis 25 Gew.-%. Die Weichphase B weist mehr als 80 % asymmetrischer Teilchen (Zahlenmittel) auf, die nur eine Zellwand besitzen; die mittlere Teilchengröße liegt im Bereich von 0,1 bis 0,6 μm. Sie stellt ein Pfropfmischpolymerisat aus dem Monomeren der Hartmatrix und einem elastomeren Styrol-Butadien-Blockcopolymerisat dar.

EP 0 151 268 A1

Croydon Printing Company Ltd.

**0151268**

## Thermoplastische Formmasse

Die Erfindung betrifft eine Formmasse aus transluzentem, schlagfestem Polystyrol. Diese Formmasse ist aufgebaut aus einer Hartmatrix aus Polystyrol mit einem Anteil von 75 bis 95 Gew.-%, bezogen auf die Formmasse. In dieser Formmasse ist eine Weichphase verteilt mit einem Anteil von 5 bis 25 Gew.-% bezogen auf die Formmasse, die eine mittlere Teilchengröße im Bereich von 0,1 bis 0,6 µm aufweist. Diese Weichphase stellt ein Pfropfmischpolymerisat aus dem Monomeren der Hartmatrix und einem elastomeren Styrol-Butadien-Blockcopolymerisat dar.

Zum Stand der Technik nennen wir die DE-AS 26 13 352.

Aus der zitierten Schrift sind transluzente, schlagfeste Polystyrole beschrieben, die die übliche Kapselteilchenstruktur aufweisen. Nachteilig bei dieser Formmasse ist, daß die Schlagzähigkeit nicht besonders hoch ist.

Es bestand daher die Aufgabe, transluzentes Polystyrol herzustellen, das eine gegenüber den Formmassen mit Kapselteilchenstruktur höhere Schlagzähigkeit aufweist. Die Aufgabe wird gelöst durch eine Formmasse, mit der im Patentanspruch 1 genannten Morphologie. Die Erfindung betrifft somit eine Formmasse, enthaltend (vorzugsweise bestehend aus)

A) eine (r) Hartmatrix aus Polystyrol, in einem Anteil von 75 bis 95 Gew.-%, vorzugsweise 80 bis 90 Gew.-%, bezogen auf die Formmasse aus A+B und

B) eine(r) darin verteilte(n) Weichphase in einem Anteil von 5 bis 25 Gew.-%, vorzugsweise 10 bis 20 Gew.-%, bezogen auf die Formmasse aus A+B, die eine mittlere Teilchengröße im Bereich von 0,1 bis 0,6 µm aufweist (Zahlenmitte), die ein Pfropfmischpolymerisat aus dem Monomeren der Hartmatrix und einem elastomeren Styrol-Butadien-Zwei-Blockcopolymerisat darstellt. Die Formmasse ist dadurch gekennzeichnet, daß die in der Hartmatrix dispergierte Weichphase B mehr als 80 %, vorzugsweise mehr als 85 %, (Zahlenmittel) asymmetrische Teilchen aufweist, die nur eine Zellwand besitzen.

Nachstehend wird der Aufbau der erfindungsgemäßen Formmasse, d.h. insbesondere die Morphologie der erfindungsgemäßen Formmasse sowie das Verfahren zu deren Herstellung und die dafür erforderlichen Ausgangsstoffe und Hilfsmittel beschrieben.

0151268

Komponente A

Die erfindungsgemäße Formmasse ist aus einer Hartmatrix aus Polystyrol aufgebaut. Diese Hartmatrix macht, bezogen auf die Formmasse, aus den Komponenten A+B, 75 bis 95 Gew.-%, vorzugsweise 80 bis 90 Gew.-% aus. Als vinylaromatisches Monomeres zum Aufbau der Hartmatrix kommt insbesondere Styrol in Frage. Es können jedoch auch alpha-Methylstyrol oder para-Methylstyrol oder Mischungen der vorgenannten Monomeren verwendet werden, bevorzugt ist jedoch die ausschließliche Verwendung von Styrol, so daß die Hartmatrix bevorzugt aus Polystyrol besteht. Die Hartmatrix kann Viskositätszahlen im Bereich von 50 bis 140, insbesondere im Bereich von 70 bis 120, aufweisen. Dies entspricht mittleren Molgewichten ($\overline{M}_v$) im Bereich von 100 000 bis 350 000, insbesondere 150 000 bis 300 000.

Komponente B

Die erfindungsgemäße Formmasse weist als Komponente B eine Weichphase auf, die fein dispergiert in der Hartmatrix vorliegt. Die Art und Weise, wie eine Weichphase in eine Hartmatrix dispergiert werden kann, ist dem Fachmann geläufig. Die Weichphase ist in einem Anteil von 5 bis 25 Gew.-%, vorzugsweise von 10 bis 20 Gew.-% in der Hartmatrix vorhanden. Außerdem weist diese Weichphase eine mittlere Teilchengröße im Bereich von 0,1 bis 0,6 µm, vorzugsweise im Bereich von 0,1 bis 0,5 µm auf. Bei dem genannten Teilchengrößenbereich handelt es sich um die mittlere Teilchengröße, bestimmt durch Auszählen einer Elmi-Aufnahme (Zahlenmittel). Bei der sogenannten Weichphase handelt es sich um ein Pfropfmischpolymerisat aus dem Monomeren der Hartmatrix, d.h. insbesondere aus Styrol auf ein elastomeres Styrol-Butadien-Blockcopolymerisat. Als elastomeres Styrol-Butadien-Blockcopolymerisat im Sinne der vorliegenden Erfindung wird ein lineares Zweiblockcopolymerisat verstanden, das durch anionische Polymerisation mit Hilfe von Lithiuminitiatoren hergestellt worden ist. Dieses Zweiblockcopolymerisat weist einen Blockpolystyrolgehalt von 22 bis 24 Gew.-%, bezogen auf das Blockcopolymerisat, auf, bei einem Gesamtstyrolgehalt, bezogen auf das Blockcopolymerisat, von 38 bis 42 Gew.-% (Rest jeweils Butadien). Es handelt sich daher bei dem genannten Blockcopolymerisat um ein lineares Butadien-Blockcopolymerisat mit sogenanntem verschmierten Übergang. Dem Fachman ist bekannt, wie er derartige Blockcopolymerisate herstellen kann. Dieses Blockcopolymerisat soll ein mittleres Molekulargewicht $\overline{M}_v$ von 200 000 bis 300 000 aufweisen. Die erfindungsgemäße Formmasse ist durch eine besondere Morphologie gegenüber den bekannten Formmassen abgehoben. So zeigt die erfindungsgemäße Formmasse eine dispergierte Weichphase, die mehr als 80 % vorzugsweise mehr als 85 % (Zahlenmittel) asymmetrischer Teilchen, feststellbar auf einer

0151268

Elmi-Aufnahme, aufweist. Es handelt sich bei den asymmetrischen Teilchen um solche, die, wie die Kapselteilchen, nur eine Zellwand besitzen. Gegenüber den Kapselteilchen weist jedoch die in der erfindungsgemäßen Formmasse verteilte Weichphase eine Asymmetrie auf, d.h., die erfindungsgemäße Morphologie weist, bezüglich dieser Weichphase kein Inversionszentrum und keine Symmetrieachsen oder Symmetrieebenen auf. Von den ebenfalls bekannten Zellenteilchen, die in der Regel größer sind, und mehrere Zellwände besitzen, unterscheidet sich die Weichphase der erfindungsgemäßen Formmasse ebenfalls prägnant. Unter den Asymmetriezentren, die zur Charakterisierung der Weichphase der erfindungsgemäßen Formmasse dienen, seien die Begriffe, die in der Kristallographie bzw. Mineralogie für die Beschreibung der Raumgruppen bzw. für die Beschreibung der Kristallformen angewendet werden, maßgebend (vgl. Klockmanns Lehrbuch der Mineralogie, 16. Auflage, überarbeitet und erweitert von Paul Ramdor und Hugo Strunz, Ferdinand Emke-Verlag Stuttgart, 1978).

## Aufbau der erfindungsgemäßen Formmasse

Die Herstellung der erfindungsgemäßen Formmasse erfolgt durch Polymerisation der die Hartmatrix aufbauenden Monomeren, d.h. insbesondere von Styrol und dessen Homologen oder Mischungen davon, in Gegenwart des beschriebenen linearen Styrol-Butadien-Blockcopolymerisates mit verschmiertem Übergang. Die Polymerisation kann dabei unter Verwendung der üblichen Initiatoren oder auch rein thermisch oder gemischt thermisch-radikalisch durchgeführt werden. Sie kann kontinuierlich oder diskontinuierlich durchgeführt werden, wobei die diskontinuierliche Verfahrensführung bevorzugt ist. Bevorzugt ist ferner die Durchführung in einem Zweistufenverfahren, wobei die erste Verfahrensstufe in Masse, gegebenenfalls unter Verwendung eines Lösungsmittels erfolgt und die zweite Stufe in Suspension durchgeführt wird. Verfahren zur kontinuierlichen Durchführung sind in der DE-AS 17 70 392 (Rührkessel-Turmkaskade) hinreichend beschrieben, so daß der Verweis auf diese Druckschrift genügen mag. Ein diskontinuierliches Verfahren zur Herstellung von transluzentem, schlagfestem Polystyrol ist in der in der einleitend zitierten DE-AS 26 13 352 beschrieben, daß der Fachmann darauf zurückgreifen kann.

Bei dem bevorzugten diskontinuierlichen Verfahren, das in der ersten Stufe in Masse oder Lösung durchgeführt wird, hat der Fachmann in dieser 1. Verfahrensstufe die erforderliche Teilchengröße einzustellen. Diese erfolgt mit Hilfe von Scherkräften, in der dem Fachmann bekannten Weise. Die Temperaturen in der ersten Verfahrensstufe liegen im Bereich von 50°C bis 200°C, in der nachfolgenden zweiten Verfahrensstufe, die bevorzugt in Suspension durchgeführt wird, werden dem Reaktionsansatz Wasser und die

· üblichen wasserlöslichen Suspensionsmittel zugesetzt. Als solche kommen insbesondere in Betracht: Methylcellulose, Oxypropylcellulose, Polyvinylalkohol, Polyvinylpyrrolidon usw.

Bei der Pfropfmisch-Polymerisation des linearen Blockcopolymerisates in Gegenwart des die spätere Hartmatrix bildenden Monomeren wird zunächst der Kautschuk in dem Monomeren, gegebenenfalls unter Zuhilfenahme eines Lösungsmittels, polymerisiert. Dabei erfolgt eine Pfropfung der die Hartmatrix bildenden Monomeren auf den Blockkautschuk. Die Weichphase B umfaßt somit neben dem Styrolanteil des Blockkautschuks auch diesen sogenannten durch Pfropfung erzeugten Polystyrolanteil, einschließlich etwa okkludierter Polystyrolanteile, so daß diese Weichphase ein kompliziertes Gebilde darstellt. Anteile, an Polystyrol, die aus der Weichphase extrahierbar sind, können der Hartmatrix zugerechnet werden. Dem Fachmann ist bekannt, daß er die Polymerisation je nach Verfahrensführung zu unterschiedlichen Umsätzen bzw. Feststoffgehalten führen kann. Die Festlegung der Umsätze in den einzelnen Reaktoren und damit auch der Feststoffgehalte wird von ihm anhand weniger Versuche festzustellen sein, um optimale Produkte zu erhalten. Hierbei kann er sich bezüglich des diskontinuierlichen Verfahrens an die zitierte DE-AS 26 13 352 und bezüglich der diskontinuierlichen Verfahrensweise an die vorstehend erwähnte DE-AS 17 70 392 halten. Dies gilt auch in bezug auf die Aufarbeitung der bei der Polymerisation anfallenden Verfahrensprodukte, die vom Fachman unter Anlehnung an die bekannten Verfahren durchgeführt werden.

Für die Herstellung der Formmasse der vorliegenden Erfindung können auch die bekannten Hilfsmittel, wie Mineralöle, Molekulargewichtsregler, Antioxidantien usw. verwendet werden. Als Hilfsmittel seien ferner genannt Gleitmittel, wie Zinkstearat und andere Stearate bzw. andere übliche Hilfsmittel. Auch für die Verarbeitung der erhaltenen Reaktionsprodukte kann der Fachmann die bekannten Zusatzstoffe verwenden. Als solche seien genannt für die Herstellung von Formteilen aus der Formmasse: Farbstoffe, Antioxidantien, Stabilisatoren, eventuell Flammschutzmittel in den dem Fachmann geläufigen Mengen.

Die in den Beispielen und Vergleichsversuchen beschriebenen Parameter wurden wie folgt bestimmt:

1.    Lochkerbschlagzähigkeit in $kJ/m^2$ nach DIN 53 753

**0151268**

2. Die Bestimmung der Viskositätszahl, VZ, der Hartmatrix des Polystyrols erfolgte analog DIN 53 726; dabei wurden 0,5 g Material in 100 ml Toluol gelöst und bei 25°C die relative Viskosität gemessen.

Auch für die Blockkautschuke wurde, ebenso wie für die Hartmatrix, die Viskositätszahl in ml/g bestimmt. Daraus wurde mit Hilfe der Mark-Houwink-Gleichung unter den dem Fachmann bekannten Bedingungen das viskosimetrische Gewichtsmittel des Molekulargewichts berechnet.

3. Der mittlere Teilchendurchmesser der integralen Verteilung der Weichkomponente wurde durch Auswertung von Elmi-Aufnahmen bestimmt.

4. Die Anzahl der Teilchen (Zahlenmittel) der Weichkomponente wurde durch Auswertung von Elmi-Aufnahmen bestimmt.

5. Zur Bewertung der Transluzenz wurden Preßplatten hergestellt und an diesen die Transluzenz visuell bestimmt.

Die Erfindung wird nachstehend anhand von einem Beispiel und von Vergleichsversuchen näher erläutert. Die in den Beispielen und den Vergleichsversuchen genannten Teile und Prozente beziehen sich, sofern nichts anderes angegeben ist, auf das Gewicht.

In den Beispielen und Vergleichsversuchen wurde jeweils diskontinuierlich eine Masse-Suspensionspolymerisation in einem 2 l-fassenden Juvo-Kessel durchgeführt. Die Abfuhr der Reaktionswärme erfolgt durch Mantelkühlung. Die Temperatur im Innern war geregelt. Die erste Verfahrensstufe wurde bei einem Füllgrad von 40 % durchgeführt, die anschließende zweite Verfahrensstufe und damit Endstufe wurde in Suspension bei einem Füllgrad von 90 % beendet. Die Polymerisation wurde isotherm durchgeführt, dabei betrug die Innentemperatur des Kessels, d.h. die Reaktionstemperatur, konstant 123°C für die erste Verfahrensstufe. In dieser Verfahrensstufe wurde mit einem Anker-Rührer bei einer Umdrehungszahl von 200 U/m gerührt. Die erste Verfahrensstufe wurde in Abwesenheit eines Katalysators bis zu einem Umsatz von 35 % geführt. Zur Durchführung der Massepolymerisation wurden 82,7 Gew.-Teile Styrol Monomeres, 15 Teile eines linearen verschmierten Zweiblockcopolymerisates und 2,3 Teile eines Mineralöles eingesetzt (Gesamtmenge = 100). Dieser Mischung wurden zusätzlich 0,12 Teile eines sterisch gehinderten Phenols (®Irganox 1076); sowie 0,07 Teile tert.-Dodecylmercaptan als Molekulargewichtsregler zugesetzt. Nach dem angegebenen Umsatz von 35 Gew.-% wurden der Reaktionsmischung 0,05 Teile Dicumylperoxid zugegeben. Anschließend wurden 1800 Teile

0151268

Wasser, bezogen auf 100 Teile des Reaktionsansatzes der Massepolymerisation, und 18 Teile eines Schutzkolloides auf Basis von Polyvinylpyrrolidon (RLuviskol K 90) sowie 1,8 Teile Natriumphosphat als Stabilisatoren zugesetzt. In der Suspensionsstufe der Polymerisation wurde mit wechselnder Temperatur jedoch isotherm polymerisiert, nämlich 3 Stunden bei 110°C, 3 Stunden bei 130°C und abschließend noch 4 Stunden bei 140°C bis zum praktisch vollständigen Umsatz des Monomeren Styrol. Das angefallene Reaktionsprodukt wurde nachfolgend in üblicher Weise isoliert und aufgearbeitet. Von den dabei erhaltenen Produkten wurden für Elmi Aufnahmen Preßplättchen hergestellt, sowie Prüfkörper gepreßt, an denen die Lochkerbschlagzähigkeit gemessen wurde.

Das verwendete lineare Block-Copolymerisat bestand aus (vgl. Tabelle) 60 Gew.-% Butadien mit 40 Gew.-% Styrol; d.h. 15 Gew.-Teile lineares verschmiertes Zweiblockcopolymerisat entsprechen bei einem Butadiengehalt von 60 Gew.-% genau 9 Teilen Polybutadien.

Beispiel und Vergleichsversuche 1 bis 3

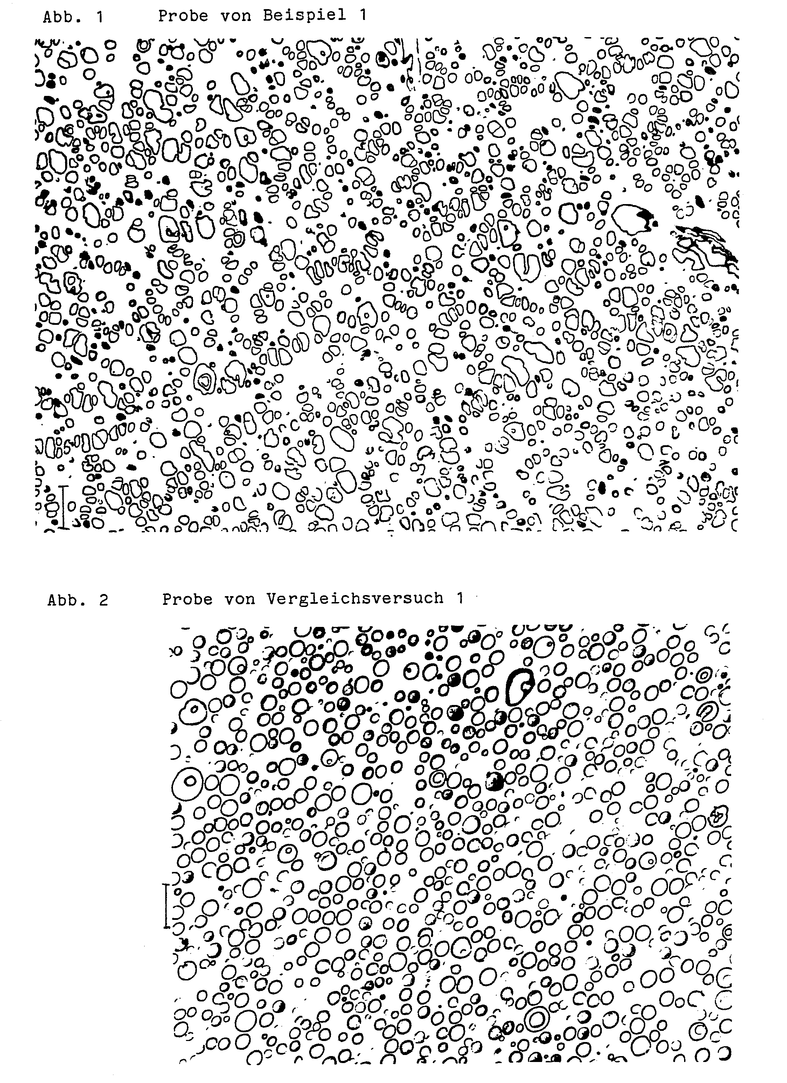

Nach den vorstehend gegebenen allgemeinen Richtlinien wurden die in der Tabelle beschriebenen linearen Blockcopolymerisate mit verschmiertem Übergang in dem genannten isothermen Zweistufenverfahren zur Polymerisation verwendet. In die Tabelle sind auch die an Proben der Versuchsprodukte erhaltenen Meßwerte, insbesondere der Lochkerbschlagzähigkeit aufgenommen. Aus dem Vergleich der Werte der Lochkerbschlagzähigkeit ergibt sich, daß gute Werte der Lochkerbschlagzähigkeit dann erhalten werden, wenn die der erfindungsgemäßen Formmasse zugrunde liegende Morphologie eingestellt ist, wie aus dem Vergleich der von den Versuchsprodukten erstellten Elmi-Aufnahmen hervorgeht. Aus dem Vergleich dieser Elmi-Aufnahmen geht hervor, daß die Morphologie der erfindungsgemäßen Formmasse wesentlich ist für gute Lochkerbschlagzähigkeit bei gleichzeitig guter Transluzenz (vgl. Abbildung 1 mit der Abbildung von Vergleichsversuch 1). Zum anderen ist ersichtlich, daß der Blockgehalt des linearen Zweiblockcopolymerisates und der Gesamtstyrolgehalt dieser Copolymerisate wesentlich für die Einstellung der beanspruchten Morphologie ist (vgl. Abbildung 1 mit den Abbildungen von Vergleichsversuch 2 und Vergleichsversuch 3).

Tabelle

| Beispiel | Blockcopolymerisat | | $\bar{M}_v$ | Lochkerbschlag- | Transluzenz |
| | Block-Styrol | Gesamt-Styrol | aus VZ. | zähigkeit $[kJ/m^2]$ | |
|---|---|---|---|---|---|
| erf.gem. | 22,8 | 40,0 | 230 000 | 21 | gut |
| Vgl.Versuch | | | | | |
| 1[+] | 31,0 | 40,0 | 230 000 | 11 | gut |
| 2 | 24,4 | 40,0 | 260 000 | 8 | gut |
| 3 | 21,7 | 40,0 | 250 000 | 21 | schlecht |

[+] bei 40 UPM in der 1. Stufe


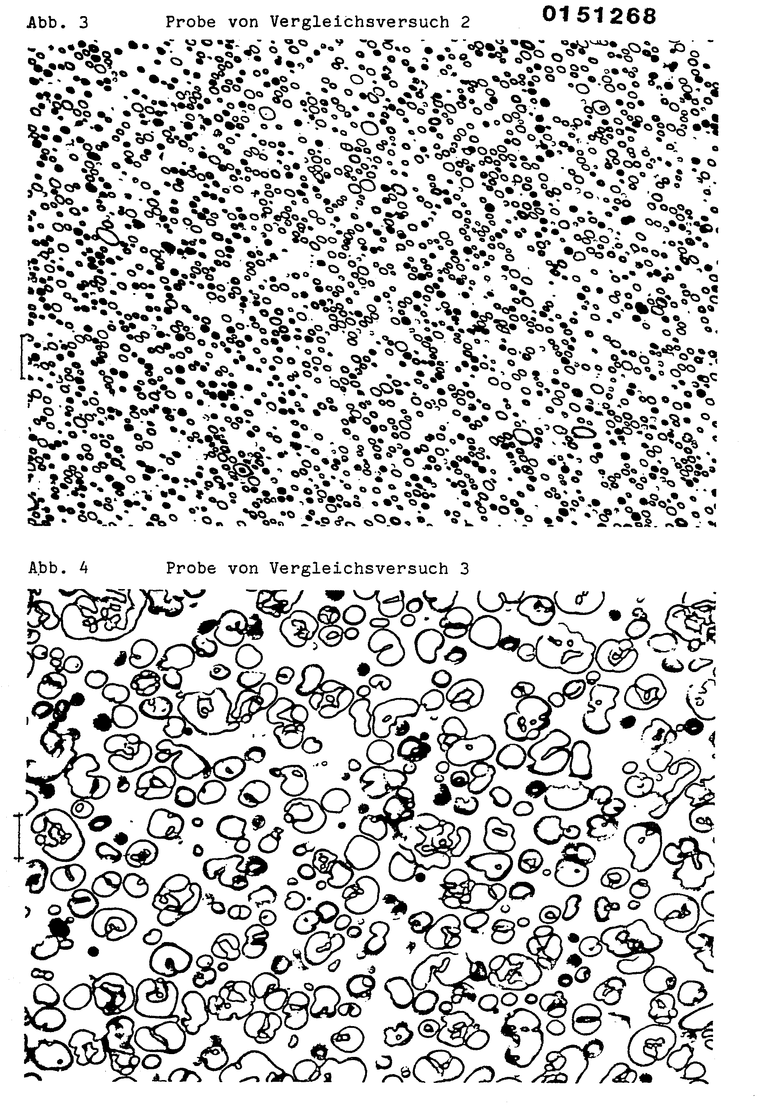

Abb. 1
Abbildung von Vergl.-Versuch 1 bis 3
entsprechen Abb. 2-4

Patentansprüche

1.  Thermoplastische Formmasse, enthaltend

    A    eine Hartmatrix aus Polystyrol in einem Anteil von 75 bis
         95 Gew.-%, bezogen auf die Formmasse aus A und B,
         und

    B    eine darin verteilte Weichphase in einem Anteil von 5 bis
         25 Gew.-%, bezogen auf die Formmasse aus A+B, die eine mittlere
         Teilchengröße im Bereich von 0,1 bis 0,6 µm aufweist (Zahlenmittel), die ein Pfropfmischpolymerisat aus dem Monomeren der
         Hartmatrix und einem elastomeren Styrol-Butadien-Zwei-Blockcopolymerisat darstellt,

    dadurch gekennzeichnet, daß die Weichphase B mehr als 80 % asymmetrischer Teilchen (Zahlenmittel) aufweist, die nur eine Zellwand besitzen.

2.  Thermoplastische Formmasse, bestehend aus

    A    einer Hartmatrix aus Polystyrol in einem Anteil von 75 bis
         95 Gew.-%, bezogen auf die Formmasse aus A und B,
         und

    B    einer darin verteilten Weichphase in einem Anteil von 5 bis
         25 Gew.-%, bezogen auf die Formmasse aus A+B, die eine mittlere
         Teilchengröße im Bereich von 0,1 bis 0,6 µm aufweist (Zahlenmittel), die ein Pfropfmischpolymerisat aus dem Monomeren der
         Hartmatrix und einem elastomeren Styrol-Butadien-Zwei-Blockcopolymerisat darstellt,

    dadurch gekennzeichnet, daß die Weichphase B mehr als 80 % asymmetrischer Teilchen (Zahlenmittel) aufweist, die nur eine Zellwand besitzen.

3.  Formmasse nach Anspruch 1, dadurch gekennzeichnet, daß das elasto-
    mere Styrol-Butadien-Blockcopolymerisat, das die Weichphase B aufbaut, 22 bis 24 Gew.-% Blockpolystyrol bei einem Gesamtpolystyrolgehalt von 38 bis 42 Gew.-%, bezogen auf das elastomere Blockcopolymerisat, aufweist.

4.  Formmasse nach Anspruch 2, bestehend aus

    A    einer Hartmatrix aus Polystyrol in einem Anteil von 75 bis
         95 Gew.-%, bezogen auf die Formmasse aus A+B,
         und

    B    einer darin verteilten Weichphase in einem Anteil von 5 bis
         25 Gew.-%, bezogen auf die Formmasse aus A+B, die erhältlich ist
         durch Polymerisation eines elastomeren Styrol-Butadien-Zwei-

-Blockcopolymerisates in Gegenwart von Styrol unter an sich bekannten Bedingungen, und wobei die Weichphase eine mittlere Teilchengröße (Zahlenmittel) im Bereich von 0,1 bis 0,6 µm aufweist,

dadurch gekennzeichnet, daß man zur Herstellung der Weichphase ein Blockcopolymerisat verwendet, das 22 bis 24 Gew.-% Blockpolystyrol bei einem Gesamtpolystyrolanteil von 38 bis 42 Gew.-%, bezogen auf das Blockcopolymerisat, aufweist.

5. Formmasse nach Anspruch 3, dadurch gekennzeichnet, daß das elastomere Blockcopolymerisat ein mittleres Molgewicht (Viskositätsmittel) im Bereich von 200 000 bis 300 000 aufweist.

6. Verfahren zur Herstellung einer thermoplastischen Formmasse bestehend aus

A     einer Hartmatrix aus Polystyrol in einem Anteil von 75 bis 95 Gew.-%, bezogen auf die Formmasse aus A+B, und

B     einer darin verteilten Weichphase in einem Anteil von 5 bis 25 Gew.-%, bezogen auf die Formmasse aus A+B, durch Polymerisation eines elastomeren Styrol-Butadien-Zwei-Blockcopolymerisates in Gegenwart von Styrol in einem diskontinuierlichen Verfahren in 2 Stufen, wobei zunächst in einer ersten Verfahrensstufe unter isothermen Bedingungen bis zu einem Umsatz im Bereich von 30 bis 45 Gew.-% in Abwesenheit eines Katalysators so polymerisiert wird, daß eine mittlere Teilchengröße (Zahlenmittel) von 0,1 bis 0,6 µm resultiert und daß man danach die Polymerisation nach Überführung des Reaktionsansatzes in Suspension isotherm und in Gegenwart von Initiatoren bis zum vollständigen Verbrauch des Styrols weiter führt unter anschließender an sich bekannter Gewinnung des Pfropfmischpolymerisates

dadurch gekennzeichnet, daß man ein Blockcopolymerisat mit verschmiertem Übergang verwendet, das 22 bis 24 Gew.-% Blockpolystyrol bei einem Gesamtpolystyrolanteil von 38 bis 42 Gew.-%, bezogen auf das Blockcopolymerisat, aufweist.

Elmiaufnahmen  7/2
Vergrößerung 10000x, rote Markierung = 1 /um

0151268

Abb. 1    Probe von Beispiel 1

Abb. 2    Probe von Vergleichsversuch 1

Abb. 3　　　Probe von Vergleichsversuch 2　　　**0151268**

Abb. 4　　　Probe von Vergleichsversuch 3

Europäisches
Patentamt

**EUROPÄISCHER RECHERCHENBERICHT**

Nummer der Anmeldung

EP 84 11 5037

| **EINSCHLÄGIGE DOKUMENTE** | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A | US-A-4 264 747 (C.F. PADDOCK)<br>* Patentansprüche *<br><br>----- | 1 | C 08 L 25/00<br><br><br><br>RECHERCHIERTE SACHGEBIETE (Int. Cl.4)<br><br>C 08 L |

Der vorliegende Recherchenbericht wurde für alle Patentansprüche erstellt.

| Recherchenort | Abschlußdatum der Recherche | Prüfer |
|---|---|---|
| DEN HAAG | 20-03-1985 | FOUQUIER J.P. |